# EUROPÄISCHE PATENTSCHRIFT

(11) **EP 0 659 458 B1**
(45) Veröffentlichungstag und Bekanntmachung des Hinweises auf die Patenterteilung: **23.07.1997**
(21) Anmeldenummer: 94119131.4
(22) Anmeldetag: 05.12.1994
(51) Int. Cl.: B01D 19/04

(54) **Entschäumerzusammensetzungen für ABS-Latices**
Antifoam compounds for ABS-latex
Composition d'antimousse pour des latex de ABS

(30) Priorität: 17.12.1993 DE 4343207
(43) Veröffentlichungstag der Anmeldung: 28.06.1995
(73) Patentinhaber: BAYER AG, 51368 Leverkusen (DE)
(72) Erfinder: Eichenauer, Herbert Dr., D-41539 Dormagen (DE); Piejko, Karl-Erwin Dr., D-51467 Bergisch Gladbach (DE); Bunte, Hans-Jürgen Dr., D-47802 Krefeld (DE); Thiem, Hans-Jürgen Dr., D-41539 Dormagen (DE)

(56) Entgegenhaltungen:
- EP-A- 0 378 049
- US-A- 3 657 136
- US-A- 4 631 145

## Beschreibung

Die Emulsionspolymerisation olefinisch ungesättigter Monomerer zur Herstellung thermoplastischer Formmassen verläuft in der Regel bei günstiger Reaktionsführung bis zu Umsätzen >99,5 %. Trotzdem ist es für einige Anwendungen der Formmassen (z.B. die Herstellung von Formteilen mit extrem geringem Anteil an flüchtigen Komponenten oder die Herstellung von Kunststoffteilen, die mit Lebensmitteln in Kontakt kommen) notwendig, die im Polymerisat noch vorhandenen Monomeren möglichst quantitativ zu entfernen.Während bei durch Lösungspolymerisation hergestellten Polymerisaten bei der Aufarbeitung, d.h. der Entfernung des Lösungsmittels, auch die Restmonomeren (vorzugsweise im Vakuum) leicht entfernt und gegebenenfalls erneut in Polymerisationsreaktionen eingesetzt werden können, ist dies bei der Emulsionspolymerisation nur nach der Reaktion auf der Latexstufe oder nach der Aufarbeitung, vorzugsweise bei der Trocknung (z.B. Sprühtrocknung), möglich.

Die bei der Trocknung entfernten Monomeren sind nur sehr schwierig zurückzugewinnen; die auf der Latexstufe durch Latexentgasung entfernten Monomeren dagegen können technisch einfacher in die Polymerisation zurückgeführt werden.

Hinderlich hierbei ist allerdings, daß Polymerisatemulsionen (Latices) aufgrund ihres Gehaltes an Emulgatoren sehr leicht schäumen - Emulgatoren haben Tensideigenschaften - , insbesondere unter den zur Monomerentfernung notwendigen Entgasungsbedingungen (z.B. Anlegen von Vakuum oder Hindurchleiten von Dampf).

Zur Vermeidung des Schäumens Tensid-enthaltender wäßriger Zusammensetzungen werden in der Literatur zahlreiche Additive ("Entschäumer") beschrieben (vgl. z.B. Surfactant Science Series, Vol. 45: Defoaming - Theory and Industrial Applications, P.R. Garrett (Ed.), Marcel Dekker, Inc., New York, Basel, Hong Kong, 1993). Als wirksame Entschäumer für Polymerlatices werden meist Produkte auf Silicon-Basis eingesetzt. Diese sind jedoch nicht für ABS-Polymerisate geeignet, da sie deren Eigenschaften (z.B. die Streckspannung) beeinträchtigen.

Ebensowenig kommen stickstoffhaltige Entschäumer (Amine, Amide) in Frage, da diese zu Verfärbungen des ABS-Polymerisats führen und deren Einsetzbarkeit als Mischungskomponente in Polymerblends (z.B. in Abmischung mit Polycarbonaten) stark einschränken.

Es besteht daher Bedarf für eine hochwirksame Entschäumerzusammensetzung für ABS-Polymerisat-Latices, die eine effektive Restmonomerentfernung ohne Schäumen des Latex nach üblichen Entgasungstechniken ermöglicht ohne Verschlechterung der Eigenschaften des ABS-Polymerisats.

Gegenstand der Erfindung ist eine als Entschäumer geeignete Mischung aus
A) C₁₀-C₂₀-Alkohol,
B) Mineralöl,
C) Ester aus einer Thiodicarbonsäure mit 4 bis 8 C-Atomen und einem Alkohol mit 10 bis 20 C-Atomen und
D) nichtionischem Emulgator.

Vorzugsweise enthält diese Mischung
30 bis 85 Gew.-Teile A,
5 bis 30 Gew.-Teile B,
5 bis 40 Gew.-Teile C und
2 bis 15 Gew.-Teile D,
und besonders bevorzugt
40 bis 80 Gew.-Teile A,
7,5 bis 25 Gew.-Teile B,
10 bis 30 Gew.-Teile C und
3 bis 15 Gew.-Teile D.

Die erfindungsgemäßen Entschäumermischungen können als Gemisch aus den Komponenten A, B, C und D oder in Form wäßriger Emulsionen oder Dispersionen des Gemisches der Komponenten A, B, C und D eingesetzt werden.

Wäßrige Emulsionen oder Dispersionen der Entschäumermischung enthalten vorzugsweise 1 bis 60 Gew.-%, besonders bevorzugt 3 bis 50 Gew.-% und ganz besonders bevorzugt 5 bis 30 Gew.-% Feststoff.

Ebenfalls Gegenstand der Erfindung ist ein Verfahren zur Entfernung von Restmonomeren aus ABS-Latices, in denen die erfindungsgemäßen Entschäumermischungen zum ABS-Latex gegeben werden und der Latex anschließend in an sich bekannter Weise entgast wird.

Als Alkoholkomponente A kommen die sogenannten Fettalkohole, d.h. gesättigte und ungesättigte aliphatische Monoalkohole, mit 10 bis 20 Kohlenstoffatomen in Frage. Beispiele für solche Verbindungen sind Decanol, Dodecanol, Tetradecanol, Hexadecanol, Octadecanol, Octadecenol, vorzugsweise werden Octadecanol, Octadecenol oder deren Gemische eingesetzt.

Als Komponente B einsetzbare Mineralöle sind z.B. Kohlenwasserstofföle, vorzugsweise Paraffinöl.

Als Komponente C werden Thiodicarbonsäureester auf Basis von C₁₀-C₂₀-Alkoholen eingesetzt, insbesondere der unter A definierten. Als Thiodicarbonsäuren sind insbesondere 2,2'-Thiodiessigsäure und 3,3'-Thiodipropionsäure geeignet. Beispiele für Thiodicarbonsäureester sind: Thiodipropionsäuredidocanolester, Thiodipropionsäureditetradecanolester, Thiodipropionsäuredioctadecanolester.

Geeignete nichtionische Emulgatoren (Komponente D) sind z.B. ethoxylierte Fettalkohole, propoxylierte Fettalkohole, ethoxylierte Fettsäsuren, propoxylierte Fettsäuren, ethoxylierte Alkylphenole, propoxylierte Alkylphenole, z.B. alkoxyliertes Nonylphenol; bevorzugt sind alkoxylierte Fettalkohole.

Die erfindungsgemäßen Entschäumermischungen werden den in Latexform vorliegenden ABS-Polymerisaten in Mengen von 100 bis 10 000 ppm, vorzugsweise 250 bis 5 000 ppm und besonders bevorzugt 500 bis 2 000 zugesetzt (jeweils bezogen auf den ABS-Feststoff).

Dabei kann die Zugabe zum ABS-Latex zu jeder Zeit zwischen beendeter Latexherstellung und Entgasung des Latex erfolgen, vorzugsweise wird die Zusammensetzung kurz vor dem Entgasen zugesetzt.

Ebenso unkritisch ist die Temperatur, bei der die Entschäumermischung dem ABS-Latex zugesetzt wird, sie kann zwischen Raumtemperatur und 100°C beliebig gewählt werden.

Die Latices können nach üblichen Verfahren entgast werden, vorzugsweise in Siebbodenkolonnen unter Einwirkung von Wasserdampf.

Die erfindungsgemäßen Entschäumermischungen sind hochwirksam, beeinträchtigen aber die Eigenschaften der ABS-Formmassen nicht, sie sind prinzipiell geeignet für alle ABS-Latices, die auf Basis anionischer Emulgatoren hergestellt wurden.

Beispiele für solche Emulgatoren sind Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren oder Seifen von Dicarbonsäuren gemäß DE-A-36 39 904 und DE-A-39 13 509.

ABS-Polymerisate, für die die Entschäumermischungen verwendet werden können, sind vorzugsweise Produkte, die durch radikalische Emulsionspolymerisation von Styrol und Arylnitril in Gegenwart von Polybutadienlatex (sogenannte Pfropfprodukte) erhalten werden. Dabei können die Pfropfmonomeren Styrol und Acrylnitril ganz oder teilweise durch α-Methylstyrol und/oder Methylmethacrylat ersetzt werden; außerdem können die Pfropfprodukte mit separat hergestellten Latices von harzartigen Polymeren gemischt werden.

Beispiele für solche harzartigen Polymerisate sind Styrol/Acrylnitril-Copolymerisate, α-Methylsryrol/Acrylnitril-Copolymerisate, Methylmethacrylat/Acrylnitril-Copolymerisate, Methylmethacrylat/Styrol-Copolymerisate, Styrol/α-Methylstyrol/Acrylnitril-Polymerisate.

### Beispiele

Die Beispiele wurden unter Verwendung des folgenden ABS-Latex durchgeführt:

ABS-Latex hergestellt durch radikalische Emulsionspolymerisation von 45 Gew.-Teilen

eines Monomerengemisches aus Styrol und Acrylnitril (Gew.-Verhältnis 72:28) in Gegenwart von 55 Gew.-Teilen eines Polybutadienlatex mit einem mittleren Teilchendurchmesser d₅₀ von 405 nm unter Verwendung von 3 Gew.-Teilen des Natriumsalzes der disproportionierten Abietinsäure (Dresinate 731) als Emulgator, Feststoffgehalt des Latex ca. 35 Gew.-%.

Eingesetzte Komponenten zur Herstellung der Entschäumermischungen:
Alkoholkomponente A1: Octadecanol
Alkoholkomponente A2: Octadecenol
Mineralölkomponente B1: Paraffinöl (Tudalen 932, Hansen und Rosenthal, Hamburg)
Thiodicarbonsäurediesterkomponente C1 : Thiodipropionsäuredidodecanolester (Irganox PS 800, Ciba-Geigy)
Thiodicarbonsäurediesterkomponente C2 : Thiodipropionsäureditetradecanolester (Irganox PS 801, Ciba-Geigy)
Thiodicarbonsäurediesterkomponente C3 : Thiodipropionsäuredioctadecanolester (Irganox PS 802, Ciba-Geigy)
Nichtionische Emulgatorkomponente D1 : Ethoxyliertes Octadecenol (10 mol Ethylenoxid an 1 mol Octadecenol) (Emulgator 0/10, Bayer AG)
Nichtionische Emulgatorkomponente D2 : Ethoxyliertes Nonylphenol (Emulgator NP 10, Bayer AG)

Die in Tabelle 1 angegebenen Entschäumermischungen wurden mit einem schnell laufenden Rührer bei 70°C in soviel Wasser emulgiert, daß jeweils Emulsionen mit einem Entschäumergehalt von 20 Gew.-% resultierten. Diese Emulsionen wurden dann dem ABS-Latex in den in Tabelle 1 angegebenen Mengen zugesetzt.

Die Beurteilung der Entschäumerwirkung erfolgte unter Verwendung einer Kolonne mit einem Siebboden, wobei das Verhalten in einer Entgasungskolonne simuliert wurde. Die verwendete Kolonne hat eine Höhe (ab Siebboden) von 150 cm und einen Durchmesser von 8 cm; die Siebbodenplatte trägt 23 Bohrungen mit einem Bohrungsdurchmesser von jeweils 5 mm.

Dabei wurden 400 ml des Latex eingefüllt und ein konstanter Strom aus Luft und Wasserdampf mit einer Strömungsgeschwindigkeit von 0,8 m/sec eingestellt, dann wurde gemessen, welche Schaumhöhe nach einer Zeit von 1 min resultiert und nach welcher Zeit die Schaumkrone eine Höhe von 150 cm (Überschäumen) erreicht.

Die Ergebnisse sind in Tabelle 1 zusammengestellt.

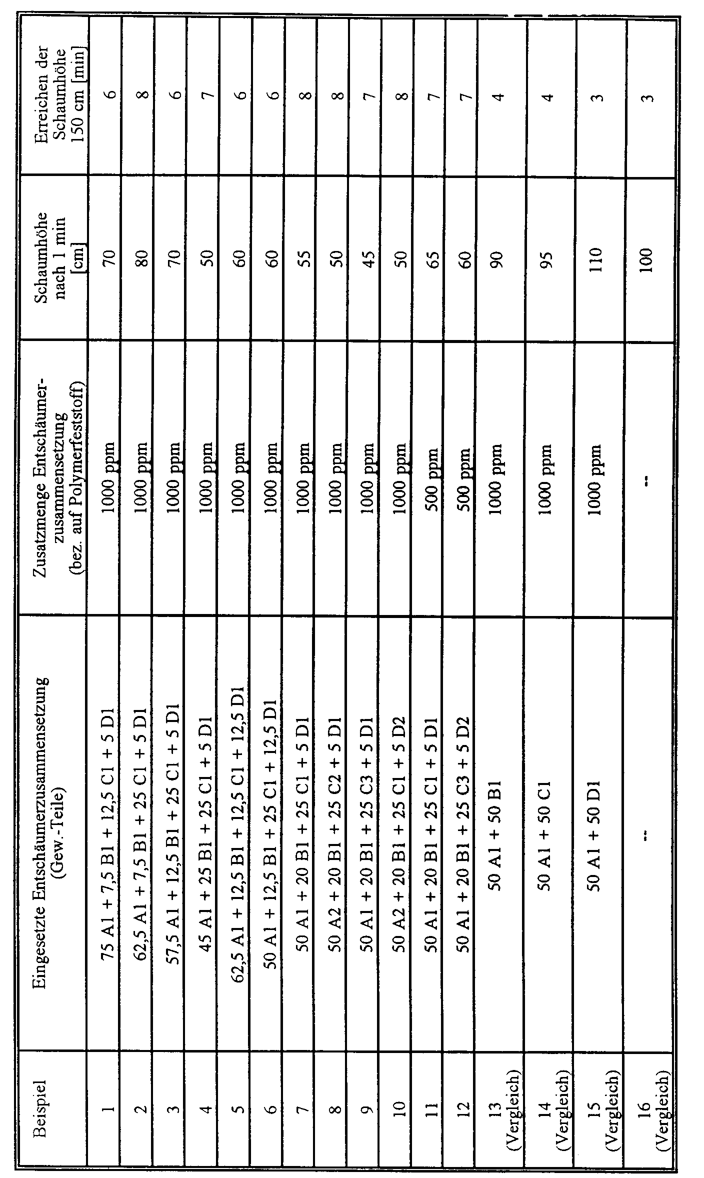

## Patentansprüche

1. Als Entschäumer geeignete Mischung aus
A) C₁₀-C₂₀-Alkohol,
B) Mineralöl,
C) Ester aus einer Thiodicarbonsäure mit 4 bis 8 C-Atomen und einem Alkohol mit 10 bis 20 C-Atomen und
D) nichtionischem Emulgator.

2. Mischung gemäß Anspruch 1, aus
30 bis 85 Gew.-Teilen A,
5 bis 30 Gew.-Teilen B,
5 bis 40 Gew.-Teilen C und
2 bis 15 Gew.-Teilen D.

3. Mischung nach Anspruch 1, aus
A) Octadecanol und/oder Octadecenol,
B) einem Paraffinöl,
C) Thiodipropionsäuredidodecanolester und
D) einem alkoxylierten Fettalkohol und/oder einem alkoxylierten Alkylphenol.

4. Verfahren zum Entfernen von Restmonomeren aus ABS-Latices, dadurch gekennzeichnet, daß eine Entschäumermischung gemaß Anspruch 1 zu einem ABS-Latex gegeben wird und der Latex anschließend in an sich bekannter Weise entgast wird.

5. ABS-Latices erhalten nach dem Verfahren gemäß Anspruch 4.

## Claims

1. A mixture suitable for use as a defoamer comprising
A) a C₁₀-C₂₀ alcohol,
B) a mineral oil,
C) an ester from a thiodicarboxylic acid with 4 to 8 carbon atoms and an alcohol with 10 to 20 carbon atoms and
D) a non-ionic emulsifier.

2. A mixture according to Claim 1 comprising
30 to 85 parts by wt. of A,
5 to 30 parts by wt. of B,
5 to 40 parts by wt. of C and
2 to 15 parts by wt. of D.

3. A mixture according to Claim 1, comprising
A) octadecanol and/or octadecenol,
B) a paraffin oil,
C) didodecyl thiodipropionate and
D) an alkoxylated fatty alcohol and/or an alkoxylated alkylphenol.

4. A process for removing residual monomers from ABS latices, characterised in that a defoaming mixture in accordance with Claim 1 is added to an ABS latex and the latex is then degassed in a manner known per se.

5. ABS latices obtained by a process in accordance with Claim 4.

## Revendications

1. Mélange convenant en tant qu'agent antimousse, et consistant en :
A) un alcool en C₁₀-C₂₀,
B) une huile minérale,
C) un ester d'un acide thiodicarboxylique en C₄-C₈ et d'un alcool en C₁₀-C₂₀, et
D) un agent émulsionnant non ionique.

2. Mélange selon la revendication 1, qui consiste en :
- 30 à 85 parties en poids de A,
- 5 à 30 parties en poids de B,
- 5 à 40 parties en poids de C, et
- 2 à 15 parties en poids de D,

3. Mélange selon la revendication 1, qui consiste en :
A) l'octadécanol et/ou l'octadécénol,
B) une huile de paraffine,
C) le thiodipropionate de didodécyle, et
D) un alcool gras alcoxylé et/ou un alkylphénol alcoxylé.

4. Procédé pour éliminer les monomères résiduels contenus dans un latex ABS, caractérisé en ce que l'on a joute au latex ABS un mélange antimousse selon la revendication 1 et on dégaze ensuite le latex de manière connue en soi.

5. Latex ABS obtenu par le procédé selon la revendication 4.
